# EUROPÄISCHE PATENTANMELDUNG

(11) **EP 1 987 751 A1**
(43) Veröffentlichungstag der Anmeldung: **05.11.2008**
(21) Anmeldenummer: 08006776.2
(22) Anmeldetag: 03.04.2008
(51) Int. Cl.: A47J 43/25, B26D 3/28

(54) **Vorrichtung zum Schneiden von Lebensmitteln**

(30) Priorität: 30.04.2007 DE 202007006186 U
(71) Anmelder: Ihlow Stanz- und Kunststofftechnik GmbH, 31188 Holle (DE)
(72) Erfinder: Ihlow, Kerstin, 31188 Holle (DE); Peter, Jörg, 31188 Holle (DE)
(74) Vertreter: Sobisch, Peter

(57) **Zusammenfassung**

Eine zum manuellen Schneiden unterschiedlicher Lebensmittel wie zum Beispiel Obst, Gemüse, Käse und Fleischwaren bestimmte Vorrichtung besteht aus zwei, um eine Achse (1) an einem Ende schwenkbar miteinander in Verbindung stehenden und in definierten Winkelstellungen um die Achse (1) relativ zueinander fixierbaren plattenförmigen Grundkörpern (2,3), welche beidseitig Führungsbahnen für das zu schneidende Lebensmittel darstellen und in ihren jeweiligen Feldebenen mit Schneidfeldern versehen sind. Jedes Schneidfeld ist mit einer flächigen Verteilung von Ausnehmungen ausgerüstet, denen jeweils ober- und unterseitig bezüglich der jeweiligen Feldebene Schneidprofile zugeordnet sind. Die Winkelstellung der beiden Grundkörper (2,3) bezüglich der Achse (1) ist mittels eines stangenartigen Abstandhalters (19) fixierbar, der in Zapfen (17,18) einhängbar ist, die an den, der Achse (1) abgekehrten Enden der Grundkörper (2,3) angeordnet sind. Dadurch, dass die Schneidprofile beidseitig bezüglich der jeweiligen Schneidfelder gebildet sind, können mittels eines einheitlich handhabbaren Gerätes vier unterschiedliche Formen einer Schneidspaltgeometrie zur Verfügung gestellt werden, so dass sich ein dementsprechend großer Anwendungsbereich der Vorrichtung auf die Behandlung von Lebensmitteln mit unterschiedlichen Schneideigenschaften ergibt.

## Beschreibung

Die Erfindung bezieht sich auf eine Vorrichtung entsprechend dem Oberbegriff des Anspruchs 1.

Derartige Vorrichtungen sind als Schneidgeräte für den Kücheneinsatz in vielfältigen Formen bekannt, z. B. in der Form von Reiben. Diese bestehen aus einem plattenförmigen, aus Metall oder Kunststoff geformten Grundkörper, der auf einer Seite eine Führungsbahn für das zu behandelnde Lebensmittel bildet, in deren Verlauf ein Schneidfeld angeordnet ist, welches aus einer flächenhaften gleichförmigen Verteilung von einzelnen, aus der Ebene des Grundkörpers herausragenden Schneidprofilen besteht. Jedes Schneidprofil ist durch eine Ausnehmung des Grundkörpers und eine, sich oberhalb derselben erstreckende, insbesondere aufwölbende Schnittkante gekennzeichnet, die zum Eindringen in das entlang der Führungsbahn bewegte Lebensmittel eingerichtet ist, so dass sich im Bereich jeder Schnittkante eine auch durch die genannte Ausnehmung definierte Schneidspaltgeometrie ergibt, von deren Abmessungen und Form sich die Gestalt des bei einer Schneidbewegung von dem Lebensmittel abgelösten Schnittgutes ableitet.

Derartige Reiben sind beispielsweise bekannt aus den Gebrauchsmustern DE 85 00 397, DE 200 08 119 und DE 20 2004 001 762. Die bei diesen Reiben benutzten Schneid profile sind regelmäßig dahingehend angelegt, dass ein Schneidvorgang beidseitig, das heißt sowohl während einer hin- als auch einer hergehenden Bewegungsphase möglich ist.

Um einen optimalen Schneidvorgang durchführen zu können, auch mit Hinblick auf den Verwendungszweck des Schnittgutes ist eine Anpassung der Schneidspaltgeometrie an das jeweils zu behandelnde Lebensmittel zweckmäßig. Diese Notwendigkeit ergibt sich auch aus dem weiten Anwendungsbereich dieser Geräte auf das Schneiden von Obst, Gemüse, Käse und Fleischwaren, deren Schneideigenschaften insbesondere unter dem Gesichtspunkt der aufzuwendenden Schneidkraft sehr unterschiedlich ausfallen.

Unter anderem zur Vermeidung der Notwendigkeit der Bereithaltung einer Vielzahl an Reiben, die sich jeweils lediglich durch die Schneidspaltgeometrie unterscheiden, ist es aus dem Gebrauchsmuster DE 20 2005 006 819 bekannt, eine Reibe als plattenförmiges Rahmengestell auszubilden, welches mit einer Ausnehmung versehen ist, die zur Aufnahme auswechselbarer, ebenfalls plattenförmiger Schneideinsätze eingerichtet ist. Jeder Schneideinsatz, dessen flächenhafte Erstreckung im Wsentlichen derjenigen des eingangs genannten Schneidfeldes entspricht, ist durch andere Schneidprofile gekennzeichnet, so dass mit einem Rahmengestell und mehreren auswechselbaren Schneideinsätzen eine für jedes Lebensmittel geeignete Schneidspaltgeometrie bereitgehalten werden kann.

Es ist die Aufgabe der Erfindung, eine Vorrichtung der eingangs genannten Art in einfacher Weise als im Wsentlichen einheitlich handhabbares Gerät auszugestalten, welches zur Behandlung von unterschiedlichen Lebensmitteln geeignet ist. Gelöst ist diese Aufgabe bei einer solchen Vorrichtung durch die Merkmale des Kennzeichnungsteils des Anspruchs 1.

Erfindungswesentlich ist hiernach, dass zwei, nach Art von Reiben angelegte plattenförmige Grundkörper an ihrem jeweils einen Ende über ein Gelenk miteinander in Verbindung stehen, und zwar derart, dass diverse Winkelstellungen der beiden Grundkörper um die Achse des Gelenkes fixierbar sind. Bereits diese allgemeinste Form der Vorrichtung bringt den Vorteil der unverlierbaren Verbindung zweier Reiben mit sich, deren Schneidfelder mit unterschiedlichen Schneidprofilen entsprechend unterschiedlichen Zweckbestimmungen ausgerüstet sind. Somit sind in einem einheitlichen Gerät zumindest zwei Schneidprofile zusammengefasst.

Entsprechend den Merkmalen des Anspruchs 2 ist das Schneidfeld mit Ausnehmungen bzw. einer flächenhaften Verteilung von Ausnehmungen versehen, denen ober- und unterseitig Schneidprofile zugeordnet sind, so dass das Schneidfeld beidseitig zum Schneiden von Lebensmitteln nutzbar ist. Angewandt auf die Vorrichtung als Baueinheit bedeutet dies, dass mit dieser insgesamt vier unterschiedliche Schneidprofile zur Verfügung gestellt werden können.

Jeder der beiden Grundkörper der Vorrichtung kann in einem Spritzformverfahren aus thermoplastischem Kunststoff hergestellt werden und zwar beispielsweise nach Maßgabe einer rechteckförmigen Grundgestalt. Diese besteht gemäß den Merkmalen des Anspruchs 3 aus einem Arbeitsteil, welches die klassischen Funktionen einer Reibe erfüllt und einem Gelenkteil, welches an dem einen Ende des Arbeitsteils angeformt und dazu bestimmt ist, eine gelenkige Verbindung zwischen zwei Grundkörpern herzustellen. Die aneinander angepassten Gelenkteile beider Grundkörper sind zweckmäßigerweise dahingehend ausgebildet, dass sich deren Gelenkachse entlang der Schmalseiten der beiden Grundkörper erstreckt.

Die Vorrichtung ist entsprechend den Merkmalen des Anspruchs 4 mit Mitteln versehen, die dazu bestimmt sind, die Drehwinkelstellungen der beiden Grundkörper um die genannte Gelenkachse zu fixieren. Hierzu kommen eine Vielzahl technischer Lösungsmöglichkeiten in Betracht , die nutzbar sind, soweit durch diese gleichzeitig eine hinreichende, d. h. den mechanischen Beanspruchungen des Schneidverfahrens gewachsene Stabilität der Vorrichtung gesichert ist. Lediglich beispielhaft ohne einen Anspruch auf Vollständigkeit sei auf außenseitig in diskreten Positionen einhängbare, biegesteife Abstandhalter, Zugmittel in Verbindung mit einer Drehfeder als auf die Drehbewegung einwirkender Rückstellfeder, unmittelbar in das Gelenk zwischen den Grundkörpern integrierte federbelastete Verrastungsmechanismen etc. hingewiesen. In weiterer Ausgestaltung kann dem Verstellmechanismus auch ein Drehknopf zugeordnet sein, der in diskreten Winkelstellungen arretierbar ist, die die Position der beiden Grundkörper anzeigen. Eine Arretierung in diskreten, vorherbestimmten Winkelstellungen wird im Allgemeinen ausreichend sein.

Die Merkmale des Anspruchs 5 sind auf eine weitere Ausgestaltung der genannten Grundkörper gerichtet. Diese sind hiernach mit Mitteln zur Abstützung auf der Berandung eines zur Aufnahme des Schnittgutes bestimmten Gefäßes ausgerüstet, so dass ein bequemes Arbeiten ermöglicht wird. Praktisch können diese Mittel durch Ausnehmungen, Nuten, jedoch auch sonstige herausragende, zur Umfassung des jeweiligen Gefäßrandes sowie zur Fixierung des zugekehrten Endes des Grundkörpers bestimmte Anformungen dargestellt werden.

Gemäß den Merkmalen der Ansprüche 6 und 7 sind an den Seiten des Grundkörpers Randstege vorgesehen, und zwar vorzugsweise symmetrisch bezüglich einer Quermittelebene. Diese Randstege verhindern ein seitliches unbeabsichtigtes Abgleiten des zu schneidenden Lebensmittels, sie können insbesondere auch dahingehend angelegt sein, dass sie zur Ausübung einer Führungsfunktion für einen Restehalter nutzbar sind und ebenfalls zu einem sicheren Arbeiten beitragen.

Man erkennt anhand der vorstehenden Ausführungen, dass mit der erfindungsgemäßen Vorrichtung ein vielseitig im Küchenbereich einsetzbares Gerät zur Verfügung gestellt wird, dessen praktische Handhabung sich einfach gestaltet.

Die Erfindung wird im Folgenden unter Bezugnahme auf die in den Zeichnungen schematisch wiedergegebenen Ausführungsbeispiele näher erläutert werden. Es zeigen:
Fig. 1 eine Seitenansicht der erfindungsgemäßen Vorrichtung;
Fig. 2 eine Ansicht der Vorrichtung entsprechend einer Blickrichtung II der Fig. 1;
Fig. 3 eine Darstellung eines ersten Ausführungsbeispieles des Arbeitsteils eines in der Vorrichtung gemäß Fig. 1 einzusetzenden Grundkörpers in der Draufsicht;

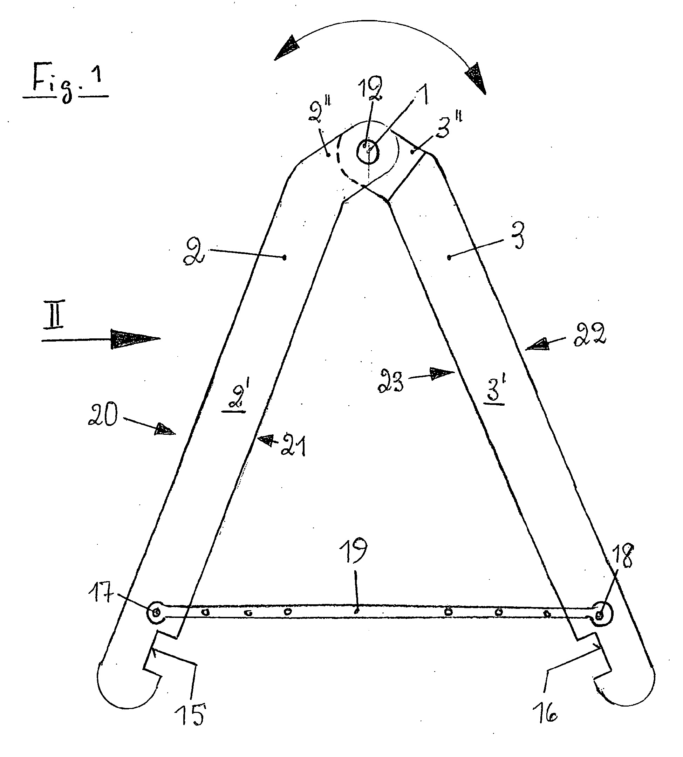

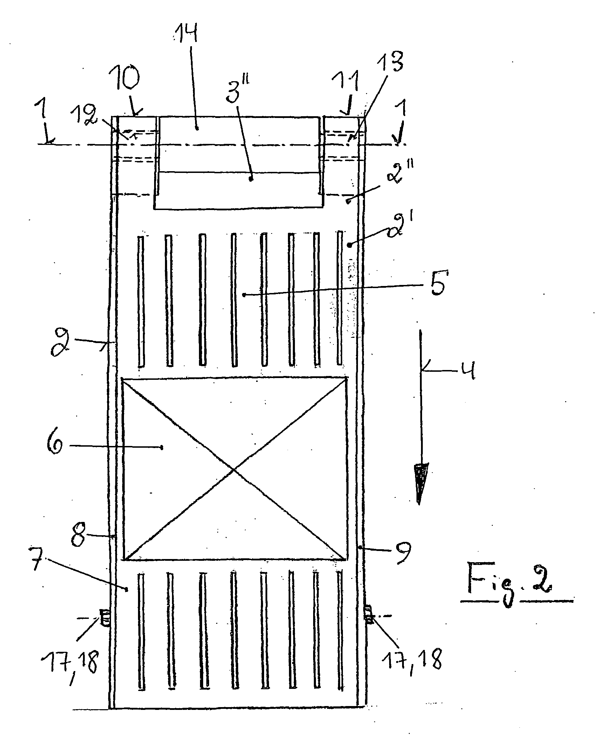

Die in ihrem grundsätzlichen Aufbau in den Figuren 1 und 2 dargestellte Vorrichtung besteht aus zwei, an ihrem jeweils einen Ende um eine Achse 1 schwenkbar miteinander in Verbindung stehenden, nach Art von Reiben ausgebildeten plattenartigen Grundkörpern 2, 3, die jeweils aus einem ebenen Arbeitsteil 2', 3' und einem, an deren einem Ende angeformten Gelenkteil 2", 3" bestehen.

Wie Fig. 2 zeigt, besteht jedes Arbeitsteil 2' - in Längsrichtung 4 gesehen - aus der Hintereinanderanordnung eines Führungsfeldes 5, eines Schneidfeldes 6 und eines weiteren Führungsfeldes 7, wobei die gesamte Anordnung seitlich durch Führungsstege 8, 9 eingefasst ist, die sich entlang des gesamten Arbeitsteils 2', 3'erstrecken und deren Bedeutung im Folgenden noch erläutert werden wird.

Jedes Führungsfeld 5, 7 ist durch mit Abstand zueinander verlaufende, sich parallel zu den seitliche Begrenzungen bildenden Führungsstegen 8, 9 erstreckende Stege gekennzeichnet, deren Höhe gegenüber der Ebene des jeweiligen Arbeitsteils 2', 3' niedriger bemessen ist als diejenige der Führungsstege 8, 9. Durch diese Führungsstege 8, 9 wird während eines Schneidvorgangs ein seitliches Abgleiten des Lebensmittels unterbunden. Besonders vorteilhaft können diese Führungsstege 8, 9 in Verbindung mit einem zeichnerisch nicht dargestellten Restehalter benutzt werden.

Die Randstege 8, 9 eines jeden Grundkörpers 2, 3 sind vorzugsweise symmetrisch bezüglich einer, sich parallel zu der Ebene der Arbeitsteile 2', 3' erstreckenden Quermittelebene vorgesehen, so dass sich hinsichtlich der Anordnung der Führungsfelder 5, 7 sowie des Schneidfeldes 6 und deren beidseitiger Einfassung durch Randstege 8, 9 ober- und unterseitig bezüglich eines Grundkörpers 2, 3 gleiche Strukturen ergeben.

Das Gelenkteil 2" des Grundkörpers 2 ist - wie Fig. 2 zeigt - durch zwei voneinander beabstandete, sich parallel zueinander erstreckende Gabelarme 10, 11 gekennzeichnet, in denen Wellenzapfen 12, 13 um die Achse 1 drehbar gelagert sind, die an den einander in Richtung der Achse 1 gegenüberliegenden Enden einer, in den Spalt zwischen den Gabelarmen 10, 11 hineinragenden Lagerkonsole 14 angeordnet sind, welche einen Teil des anderen Gelenkteiles 3" bildet.

Beide Grundkörper 2, 3 sind an ihren unteren Enden, und zwar auf ihren einander zugekehrten Seiten mit untereinander gleich beschaffenen Ausnehmungen 15, 16 versehen. Diese sind zum Aufsetzen der Vorrichtung auf die Berandung eines zur Aufnahme des Schnittgutes bestimmten Gefäßes bestimmt und eingerichtet.

Mit 17, 18 sind zwei, in der Nähe der unteren Enden angebrachte, seitlich aus den Grundkörpern 2, 3 herausragende Zapfen bezeichnet, welche zur Einhängung eines stangenartigen Abstandhalters 19 dienen. Ein solcher Abstandhalter 19 ist auf beiden Seiten der Vorrichtung vorgesehen und dient dazu, die Winkelstellung der beiden Reiben 2, 3 um die Achse 1 zu stabilisieren.

Erfindungsgemäß sind nunmehr die Schneidfelder 6 der Reiben 2, 3 unterschiedlich beschaffen, insbesondere mit unterschiedlichen Schneidprofilen ausgerüstet. Ein jedes der Schneidfelder 6 ist durch eine flächenhafte Verteilung von Ausnehmungen gekennzeichnet, denen jeweils ein aus der Feldebene herausragendes, in Verbindung mit der Ausnehmung die Schneidspaltgeometrie bestimmendes Schneidprofil zugeordnet ist.

Wesentlich ist, dass sich die Schneidprofile der Seiten 20, 21 des Grundkörpers 2 und gleichermaßen die Schneidprofile der Seiten 22, 23 des Grundkörpers 3 hinsichtlich ihrer Schneidspaltgeometrie voneinander unterscheiden, so dass die in den Figuren 1, 2 dargestellte Vorrichtung, welche ein einheitlich handhabbares Gerät bildet, immerhin vier unterschiedliche Formen einer Schneidspaltgeometrie zur Verfügung stellt.

Um letztgenannte Eigenschaft nutzen zu können, ist die Vorrichtung auch in einer solchen Konstellation nutzbar, in der die beiden Grundkörper 2, 3 gegenüber der Darstellung der Fig. 1 um die Achse 1 verschwenkt sind, und zwar mit der Maßgabe, dass in der verschwenkten Position die in Fig. 1 der Innenseite zugekehrten Seiten 21, 23 nunmehr die Außenseiten der Vorrichtung bilden und dementsprechend andere Schneidprofile für einen Schneidvorgang zur Verfügung stehen.

Wie Fig. 1 erkennen lässt, ist der Abstandhalter 19 dahingehend ausgestaltet, dass eine Verbindung mit den Zapfen 17, 18 in unterschiedlichen Einhängepositionen möglich ist, so dass dementsprechend der Winkel, den die Grundkörper 2, 3 miteinander um die Achse 1 bilden, veränderbar ist.

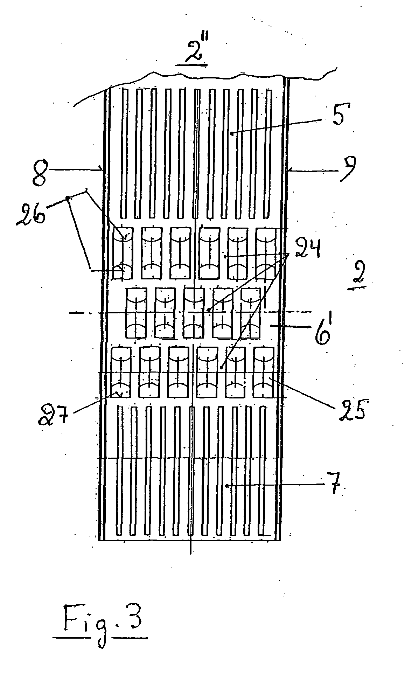

Fig. 3 zeigt eine Ausführungsform eines mit einem Schneidfeld 6' ausgerüsteten Grundkörpers 2, und zwar in der Ansicht der Seite 20. Man erkennt drei Reihen 24, die aus untereinander gleich beschaffenen Schneidprofilen 25 bestehen, die jeweils durch Auswölbungen aus der Feldebene gebildet werden und deren Stirnseiten 26 jeweils Schneiden darstellen, die sich oberhalb einer Ausnehmung 27 aufwölben. Die Gesamtheit dieser Schneidprofile 25 bildet das Schneidfeld 6'.

Die der oberseitigen Darstellung gemäß Fig. 3 gegenüberliegende Unterseite des Schneidfeldes 6' ist mit anderen zeichnerisch nicht dargestellten Schneidprofilen versehen, so dass sich hier eine andere Schneidspaltgeometrie ergibt.

Man erkennt, dass mit der erfindungsgemäßen Vorrichtung ein einheitlich handhabbares Gerät für den Küchenbereich zur Verfügung gestellt wird, welches vier unterschiedliche Schneidprofile zur Verfügung stellt.

## Patentansprüche

1. Vorrichtung zum manuellen Schneiden von Lebensmitteln, mit zumindest einem, auf einem plattenförmigen, eine Führungsbahn für das Lebensmittel bildenden Grundkörper (2,3) dargestellten Schneidfeld (6,6'), in welchem wenigstens ein zusammen mit einer Ausnehmung (27) in der Feldebene einen Schneidspalt definierendes Schneidprofil (25) vorgesehen ist, **gekennzeichnet durch** zwei an einem Ende um eine Achse (1) schwenkbar miteinander in Verbindung stehende und in definierten Winkelstellungen um die Achse (1) relativ zueinander fixierbare Grundkörper (2, 3), deren jeweilige Schneidfelder (6) mit unterschiedlichen Schneidprofilen (25) ausgerüstet sind.

2. Vorrichtung nach Anspruch 1, **dadurch gekennzeichnet, dass** das Schneidfeld (6, 6') wenigstens eines Grundkörpers (2,3) mit Ausnehmungen (27) versehen ist, denen oberseitig und unterseitig Schneidprofile (25) zugeordnet sind.

3. Vorrichtung nach Anspruch 1 oder 2, **dadurch gekennzeichnet, dass** der Grundkörper (2,3) aus Kunststoff besteht und aus einem, zumindest das Schneidfeld (25) aufnehmenden Arbeitsteil (2',3') und einem, an dieses angeformten Gelenkteil (2",2") besteht.

4. Vorrichtung nach einem der vorangegangenen Ansprüche 1 bis 3, **gekennzeichnet durch** Mittel, die dazu bestimmt sind, die Drehwinkelstellungen der Grundkörper (2,3) um die Achse (1) in vorzugsweise diskreten Stellungen zu fixieren.

5. Vorrichtung nach einem der vorangegangenen Ansprüche 1 bis 4, **gekennzeichnet durch** Mittel, die dazu bestimmt sind, den Grundkörper/die Grundkörper (2,3) auf der Berandung eines Gefäßes abzustützen.

6. Vorrichtung nach einem der vorangegangenen Ansprüche 1 bis 5, **dadurch gekennzeichnet, dass** jeder Grundkörper (2,3) mit seitlichen Randstegen (8,9) versehen ist.

7. Vorrichtung nach Anspruch 6, **dadurch gekennzeichnet, dass** sich die Randstege (8,9) symmetrisch bezüglich einer Quermittelebene im Wesentlichen entlang der gesamten Länge des Grundkörpers (2,3) erstrecken.
